# DEMANDE DE BREVET EUROPEEN

(11) **EP 3 633 648 A1**
(43) Date de publication de la demande: **08.04.2020**
(21) Numéro de dépôt: 19200039.6
(22) Date de dépôt: 27.09.2019
(51) Int. Cl.: G08G 1/14, G07B 15/02

(54) **PROCEDE DE LOCALISATION D'UN EMPLACEMENT DE STATIONNEMENT D'UN VEHICULE DANS UN PARKING**

(30) Priorité: 04.10.2018 FR 1859211
(71) Demandeur: Bull SAS, 78340 Les Clayes-sous-Bois (FR)
(72) Inventeur: CECCHI, Antoine, 38000 GRENOBLE (FR); GRIENAY, Jonathan, 38200 VIENNE (FR); CAYUELA, Jacques, 38700 LA TRONCHE (FR)
(74) Mandataire: Plasseraud IP

(57) **Abrégé**

L'invention concerne un procédé de localisation d'un emplacement de stationnement d'un véhicule dans un parking équipé de plusieurs caméras (2, 3), comprenant : une détection (15), par une caméra (2) située à l'entrée du parking, du véhicule et de sa plaque d'immatriculation, lors de son entrée dans le parking, un suivi (12, 14) du trajet du véhicule dans le parking, par reconnaissance, par une ou plusieurs caméras (3) situées le long de son trajet, de sa plaque d'immatriculation préalablement détectée, une localisation (13), de l'emplacement de stationnement du véhicule ou de la zone autour de l'emplacement de stationnement du véhicule, dans le parking à la fin de son trajet, à partir d'une ou de plusieurs des dernières images prises par la dernière caméra (3) à avoir reconnu sa plaque d'immatriculation pendant le suivi (12, 14) de son trajet.

## Description

### DOMAINE DE L'INVENTION

L'invention concerne le domaine des procédés de localisation d'un emplacement de stationnement d'un véhicule dans un parking et le domaine des parkings adaptés à la mise en œuvre du procédé de localisation d'un emplacement de stationnement d'un véhicule dans un parking selon l'invention.

Le procédé de localisation d'un emplacement de stationnement d'un véhicule dans un parking selon l'invention pourra également être utilisé dans le domaine des procédés de guidage d'un utilisateur vers l'emplacement de stationnement de son véhicule dans un parking ainsi que dans le domaine des procédés de de traitement statistique des données relatives aux trajets des véhicules dans un parking.

### CONTEXTE DE L'INVENTION

Selon un art antérieur, il est connu d'aider un utilisateur à géo-localiser son véhicule stationné dans un parking, lorsque cet utilisateur revient chercher son véhicule dans le parking, par l'intermédiaire d'un objet géo-localisable et préalablement disposé dans le véhicule stationné par l'utilisateur, et également activé par l'utilisateur, avant que cet utilisateur ne quitte son véhicule stationné et ne sorte du parking.

Un premier inconvénient, pour l'utilisateur, est de nécessiter un tel objet géo-localisable.

Un deuxième inconvénient, pour l'utilisateur, est de veiller à le garder en état de fonctionnement, et de penser à l'activer lorsque nécessaire.

Un troisième inconvénient est la précision de géolocalisation, lorsque la géolocalisation est possible, qui peut être insuffisante, notamment dans des lieux souvent souterrains comme des parkings, et en particulier pour discriminer la position de l'objet géo-localisable entre les différents étages souterrains d'un parking.

### RESUME DE L'INVENTION

Le but de la présente invention est de fournir un procédé de localisation d'un emplacement de stationnement d'un véhicule dans un parking palliant au moins partiellement tout ou partie des inconvénients précités.

Plus particulièrement, l'invention vise à fournir un procédé de localisation d'un emplacement de stationnement d'un véhicule dans un parking, qui soit beaucoup plus simple pour l'utilisateur, et qui reste accessible, tant au niveau de l'investissement qu'au niveau du fonctionnement et de la maintenance pour le gestionnaire du parking.

L'invention se propose pour cela de baser son procédé de localisation d'un emplacement de stationnement d'un véhicule dans un parking, sur un réseau de caméras suffisamment dense dans le parking pour permettre le suivi du trajet des véhicules dans le parking entre l'entrée du parking et l'emplacement de stationnement choisi par le véhicule.

Le principe utilisé par l'invention pour assurer le suivi du trajet d'un véhicule donné dans le parking est la reconnaissance de la plaque d'immatriculation associée à ce véhicule, chaque véhicule ayant une plaque d'immatriculation différente de celle des autres véhicules, sur les images respectivement prises par les caméras du parking au cours du trajet de ce véhicule donné.

A cette fin, la présente invention propose un procédé de localisation d'un emplacement de stationnement d'un véhicule dans un parking équipé de plusieurs caméras, comprenant : une détection, par une caméra située à l'entrée du parking, du véhicule et de sa plaque d'immatriculation, lors de son entrée dans le parking, un suivi du trajet du véhicule dans le parking, par reconnaissance, par une ou plusieurs caméras situées le long de son trajet, de sa plaque d'immatriculation préalablement détectée, une localisation, de l'emplacement de stationnement du véhicule ou de la zone autour de l'emplacement de stationnement du véhicule, dans le parking à la fin de son trajet, à partir d'une ou de plusieurs des dernières images prises par la dernière caméra à avoir reconnu sa plaque d'immatriculation pendant le suivi de son trajet.

Une zone autour de l'emplacement de stationnement du véhicule couvre un certain voisinage autour de l'emplacement de stationnement du véhicule. Ce voisinage peut être choisi plus ou moins grand, notamment par rapport à la taille globale du parking. Préférentiellement :
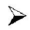 une zone couvre entre 2 et 20 places de parking,
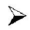 et/ou une zone couvre de quelques places à quelques dizaines de places de parking,
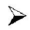 et/ou une zone couvre au plus un étage de parking.

A cette fin, la présente invention propose aussi un procédé de guidage d'un utilisateur vers l'emplacement de stationnement de son véhicule dans un parking équipé de plusieurs caméras, comprenant : un procédé de localisation de l'emplacement de stationnement de son véhicule selon l'invention, un envoi vers un terminal mobile de cet utilisateur, sur requête de cet utilisateur par l'intermédiaire de son terminal mobile, d'un guidage allant de la position de l'utilisateur lors de sa requête vers l'emplacement de stationnement de son véhicule.

A cette fin, la présente invention propose encore un procédé de traitement statistique des données relatives aux trajets des véhicules dans un parking équipé de plusieurs caméras, comprenant : un procédé de localisation de l'emplacement de stationnement des véhicules selon l'invention, un stockage dans une base de données, d'un ensemble de données relatives aux trajets des véhicules dans le parking, un traitement statistique différé des données stockées déterminant des paramètres relatifs aux trajets des véhicules dans le parking.

Ainsi, une fois les données stockées pour être utilisées par le procédé de localisation d'un emplacement de stationnement d'un véhicule dans un parking, elles peuvent également être utilisées, sans coût d'acquisition supplémentaire, par un procédé de traitement statistique des données relatives aux trajets des véhicules dans un parking.

A cette fin, la présente invention propose enfin un parking intégrant : plusieurs caméras aptes à prendre des images de plaques d'immatriculation de véhicules, un serveur de reconnaissance de plaques d'immatriculation de véhicules, une base de données de stockage de plaques d'immatriculation de véhicules, et avantageusement d'autres informations relatives aux véhicules, les caméras, le serveur de reconnaissance et la base de données, étant reliés entre eux, de manière à pouvoir réaliser : un procédé de localisation de l'emplacement de stationnement des véhicules selon l'invention, et/ou un procédé de guidage d'un utilisateur vers l'emplacement de stationnement de son véhicule selon l'invention, et/ou un procédé de traitement statistique des données relatives aux trajets des véhicules selon l'invention.

Suivant des modes de réalisation préférés, l'invention comprend une ou plusieurs des caractéristiques suivantes qui peuvent être utilisées séparément ou en combinaison partielle entre elles ou en combinaison totale entre elles, avec l'un quelconque des objets précités de l'invention.

De préférence, la localisation de l'emplacement de stationnement du véhicule dans le parking, est réalisée par une estimation de la distance entre le véhicule stationné et cette dernière caméra, cette estimation étant réalisée par une analyse de la ou des images prises par cette dernière caméra, cette analyse utilisant avantageusement un modèle d'apprentissage profond et/ou un ou plusieurs processeurs graphiques.

Ainsi, la détection est réalisée simplement, par la seule exploitation logicielle des images prises par les caméras. Une alternative serait d'équiper chaque emplacement de stationnement dans le parking d'un numéro visible et lisible par les caméras lesquelles n'auraient plus qu'à identifier ce numéro d'emplacement. Cette alternative requiert toutefois un investissement supérieur au niveau de l'installation du parking, pour le gestionnaire de parking.

De préférence, l'estimation de distance est réalisée : soit à partir d'une seule image 2D du véhicule prise sur l'emplacement de stationnement, soit à partir d'au moins deux images 2D du véhicule prises par la même caméra, l'une sur l'emplacement de stationnement et l'autre à une distance prédéterminée connue de cette caméra, soit à partir d'au moins deux images 2D du véhicule prises par deux caméras différentes sous deux angles différents.

Une seule image 2D (à deux dimensions) est la solution préférentielle la plus simple. Au moins deux images 2D du véhicule prises par la même caméra, l'une sur l'emplacement de stationnement et l'autre à une distance prédéterminée connue de cette caméra, est une solution un peu plus complexe, mais qui peut se révéler plus précise, notamment à cause des gabarits assez différents de véhicules pouvant se stationner dans un parking. Au moins deux images 2D du véhicule prises par deux caméras différentes sous deux angles différents est la solution la plus précise, mais elle est notablement plus coûteuse car elle requiert une densité de caméras nettement supérieure, dans la mesure où chaque emplacement de stationnement doit alors pouvoir être vu par au moins deux caméras différentes.

De préférence, la localisation de l'emplacement de stationnement du véhicule dans le parking, est réalisée par une reconnaissance d'un numéro d'emplacement de stationnement situé au niveau de chaque emplacement de stationnement ou de chaque groupe d'emplacements de stationnement adjacents.

Ainsi, la reconnaissance de l'emplacement de stationnement ou de la zone autour de l'emplacement de stationnement est nettement facilitée, mais au prix d'un investissement supérieur au niveau du parking, affichant les ou des numéros d'emplacement de stationnement (place 307, place 308, zone 3A du parking, etc...), de préférence d'une manière à être facilement vus par les caméras, par exemple perpendiculairement au mur le long duquel court une allée d'emplacements de stationnement vue en enfilade par une caméra placée à l'extrémité de l'allée.

De préférence, la reconnaissance, par la ou les caméras du parking situées le long du trajet du véhicule, et par la caméra située à l'entrée du parking, de sa plaque d'immatriculation, est réalisée par une analyse d'une ou de plusieurs images prises par cette ou par ces caméras, cette analyse utilisant avantageusement un modèle d'apprentissage profond et/ou un ou plusieurs processeurs graphiques.

L'utilisation d'un modèle d'apprentissage profond va garantir une bonne précision et une bonne fiabilité du procédé de localisation d'un emplacement de stationnement d'un véhicule, malgré les formats (couleur du fond, couleur et police et disposition des caractères sur le fond, etc ...) et les états très différents (sales, propres, tordues, abîmés, etc ...) des différentes plaques d'immatriculation existant dans le parc de tous les véhicules circulant et susceptibles de venir stationner dans le parking considéré, y compris les plaques d'immatriculation de véhicules provenant de différents pays.

De préférence, pour au moins 80% du nombre d'emplacements de stationnement du parking, de préférence pour au moins 90% du nombre d'emplacements de stationnement du parking, de préférence pour tous les emplacements de stationnement du parking, chaque emplacement de stationnement peut être vu au moins par une caméra du parking.

Ainsi, la précision et la fiabilité du procédé de localisation d'un emplacement de stationnement d'un véhicule dans le parking sont très bonnes, au prix d'une densité notable, quoique raisonnable, de caméras dans le parking.

De préférence, si le véhicule est sorti du champ de la dernière caméra ayant reconnu sa plaque d'immatriculation, mais n'est pas entré dans le champ de la caméra suivante qu'il aurait rencontré s'il avait continué son trajet, le procédé de localisation en déduit que le véhicule est resté stationné dans la zone d'ombre située entre la dernière caméra et la caméra suivante.

Ainsi, d'une part la densité de caméras peut être un peu diminuée, sans trop sacrifier la précision et la fiabilité du procédé de localisation d'un emplacement de stationnement d'un véhicule dans un parking, et d'autre part, l'utilisateur peut être guidé pour retrouver son véhicule, même si son véhicule est stationné à un emplacement qui n'est pas vu par une caméra ou qui n'est pas vraiment un emplacement prévu pour le stationnement.

De préférence, la localisation est effectuée sans utilisation d'objet additionnel qui serait situé dans le véhicule et qui permettrait une géolocalisation directe du véhicule, avantageusement sans aucun autre moyen que la reconnaissance d'image par les caméras du parking.

Ainsi, le procédé de localisation d'un emplacement de stationnement d'un véhicule dans un parking est rendu le plus simple possible pour l'utilisateur, voire même pour l'équipement du parking, c'est-à-dire alors pour le gestionnaire du parking également.

De préférence, la détection de la plaque d'immatriculation du véhicule est réalisée systématiquement et automatiquement pour tout véhicule entrant dans le parking.

Ainsi, tout utilisateur pourra profiter du procédé de localisation d'un emplacement de stationnement d'un véhicule dans un parking, qu'il l'ait demandé à l'avance ou non, et même lorsqu'il se décide au dernier moment, c'est-à-dire en allant rechercher son véhicule sur son emplacement de stationnement.

De préférence, le suivi de trajet est réalisé en temps réel, pour tous les véhicules cherchant un emplacement de stationnement dans le parking, avantageusement pour tous les véhicules circulant dans le parking.

Ainsi, le risque de perdre un véhicule de vue pendant son trajet, et de devoir ensuite le retrouver plus ou moins péniblement, est pratiquement supprimé.

De préférence, la plaque d'immatriculation détectée à l'entrée du parking est stockée dans une base de données, au moins tout le temps que le véhicule reste sur son emplacement de stationnement, avantageusement au moins tout le temps que le véhicule reste dans le parking, encore plus avantageusement plus longtemps que le temps de séjour du véhicule dans le parking.

Ainsi, lorsque la plaque d'immatriculation détectée à l'entrée du parking est stockée dans une base de données :
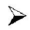 au moins tout le temps que le véhicule reste sur son emplacement de stationnement, alors même si l'utilisateur revient chercher son véhicule longtemps après, il est assuré de pouvoir profiter du procédé de localisation d'un emplacement de stationnement d'un véhicule dans un parking,
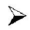 au moins tout le temps que le véhicule reste dans le parking, alors même si l'utilisateur a stationné son véhicule puis est revenu pour le changer de place ensuite, il est assuré de pouvoir profiter du procédé de localisation d'un emplacement de stationnement d'un véhicule dans un parking,
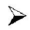 plus longtemps que le temps de séjour du véhicule dans le parking, non seulement l'utilisateur est toujours assuré de pouvoir profiter du procédé de localisation d'un emplacement de stationnement d'un véhicule dans un parking, mais aussi le gestionnaire du parking pourra mettre en œuvre un procédé de traitement statistique différé des données relatives aux trajets des véhicules dans un parking.

De préférence, la détection, par une caméra située à l'entrée du parking, du véhicule et de sa plaque d'immatriculation, lors de son entrée dans le parking, effectue également la détection, à l'entrée du parking, d'autres informations relatives au véhicule, parmi lesquelles au moins le modèle du véhicule et la couleur du véhicule, qui sont ensuite stockées dans une base de données, au moins tout le temps que le véhicule reste sur son emplacement de stationnement, avantageusement au moins tout le temps que le véhicule reste dans le parking, encore plus avantageusement plus longtemps que le temps de séjour du véhicule dans le parking.

Ainsi, d'une part dans certains cas où l'utilisateur a oublié sa plaque d'immatriculation, il peut tout de même bénéficier du procédé de localisation d'un emplacement de stationnement d'un véhicule dans un parking, à l'aide de simples informations comme le modèle et la couleur de son véhicule, et d'autre part le procédé de traitement statistique des données relatives aux trajets des véhicules dans un parking mis en œuvre par le gestionnaire du parking pourra être notablement plus riche.

De préférence, tous les emplacements de stationnement du parking sont dans le champ de vision d'au moins une caméra du parking.

De préférence, à chaque étage du parking, se trouve au moins une caméra, disposée avantageusement à l'entrée de cet étage.

Si le nombre des caméras dans le parking est insuffisant ou si la couverture des caméras dans le parking est insuffisante, le procédé ne va localiser qu'une zone autour de l'emplacement de stationnement du véhicule et non pas l'emplacement de stationnement du véhicule. Selon une réalisation préférentielle, tous les emplacements de stationnement du parking sont dans le champ de vision d'au moins une caméra du parking. Selon une réalisation préférentielle, à chaque étage du parking, se trouve au moins une caméra, disposée avantageusement à l'entrée de cet étage. Selon une autre réalisation optionnelle, il y a une caméra pour chaque zone de chaque étage du parking, une zone couvrant préférentiellement entre 2 et 20 places de parking, une zone couvrant avantageusement de quelques places à quelques dizaines de places de parking, une zone ne couvrant normalement pas plus qu'un étage de parking.

De préférence, si l'utilisateur a oublié sa plaque d'immatriculation, mais donne le modèle et la couleur du véhicule, le procédé de guidage lui propose une sélection possible de plusieurs plaques d'immatriculation et/ou de plusieurs trajets possibles, l'utilisateur pouvant alors en sélectionner l'une ou l'un d'entre eux, l'utilisateur pouvant ensuite en sélectionner une ou un autre si la sélection précédente ne correspondait pas à son véhicule, le guidage envoyé correspondant à la plaque d'immatriculation ou au trajet sélectionné(e) par l'utilisateur.

Ainsi, dans certains cas où l'utilisateur a oublié sa plaque d'immatriculation, il peut tout de même bénéficier du procédé de localisation d'un emplacement de stationnement d'un véhicule dans un parking, à l'aide de simples informations comme le modèle et la couleur de son véhicule.

De préférence, le terminal mobile est un téléphone mobile, la requête de l'utilisateur étant avantageusement transmise par une application smartphone encore appelée application de téléphone intelligent.

Ainsi, la grande majorité des utilisateurs peut bénéficier facilement du procédé de localisation d'un emplacement de stationnement d'un véhicule dans un parking, car la très grande majorité des propriétaires de véhicule possède aujourd'hui un téléphone mobile, voire même un téléphone intelligent.

De préférence, le guidage allant de la position de l'utilisateur lors de sa requête vers l'emplacement de stationnement de son véhicule est affiché sur l'écran de son terminal mobile, et/ou le guidage allant de la position de l'utilisateur lors de sa requête vers l'emplacement de stationnement de son véhicule est décrit oralement par l'assistant vocal de son terminal mobile.

Ainsi, l'ergonomie du guidage peut être améliorée, tout comme elle peut être adaptée aux différents goûts et souhaits des différents utilisateurs.

De préférence, les données stockées comprennent une ou plusieurs données parmi lesquelles : les modèles de véhicule, les couleurs de véhicule, les trajets empruntés par les véhicules, les vitesses réalisées par les véhicules, les essais ratés de stationnement avec prolongement de trajet, les paramètres déterminés stockées comprennent un ou plusieurs paramètres parmi lesquels : temps moyen de circulation d'un véhicule pour trouver un emplacement de stationnement, nombre moyen d'étages du parking parcouru par un véhicule pour trouver un emplacement de stationnement, la qualité d'un emplacement de stationnement, selon qu'un véhicule qui passe devant lorsqu'il est libre, s'y stationne ou non, ou essaye de s'y stationner sans réussir pour en repartir immédiatement.

Ainsi, l'enrichissement des données utilisées par les procédés, d'une part de localisation d'un emplacement de stationnement d'un véhicule dans un parking et d'autre part de traitement statistique des données relatives aux trajets des véhicules dans un parking, va également enrichir les résultats proposés et les possibilités offertes par ces mêmes procédés, soit pour les parkings existants, soit pour les futurs parkings, gérés par le gestionnaire de parking.

De préférence, les données stockées sur la base de données sont récupérées, pour réaliser le traitement statistique différé, par l'intermédiaire d'une interface internet du gestionnaire du parking déportée par rapport au parking.

Ainsi, la déportation du traitement statistique différé et son interfaçage avec internet, le rendent plus faciles à mettre en œuvre par le gestionnaire du parking.

De préférence, le parking intègre : une ou plusieurs bornes interactives, chaque borne interactive étant apte à afficher un plan du parking et un guidage allant de la position de cette borne interactive vers l'emplacement de stationnement du véhicule d'un utilisateur sur requête de cet utilisateur, et/ou une ou plusieurs panneaux affichant respectivement des QR codes, l'emplacement de chacun de ses panneaux étant répertorié dans le parking, de manière à permettre l'affichage sur le terminal mobile de l'utilisateur le requérant, un guidage allant de la position de ce panneau vers l'emplacement de stationnement de son véhicule.

Ainsi, l'ergonomie du guidage peut être améliorée, tout comme elle peut être adaptée aux différents goûts et souhaits des différents utilisateurs. Des bornes WIFI peuvent également être installées à chaque étage du parking ou dans chaque zone de chaque étage du parking, afin de permettre de localiser très précisément le terminal mobile d'un utilisateur envoyant une requête de guidage, et ceci, même dans les différents étages d'un parking souterrain.

De préférence, le parking est un parking d'aéroport, ou de gare ou de caserne.

Le procédé de localisation selon l'invention est d'autant plus intéressant que le parking est grand et réparti soit sur de nombreux étages soit en de nombreuses zones ou parties. C'est particulièrement le cas pour les parkings d'aéroport, pour les parkings de gare et pour les parkings de caserne.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

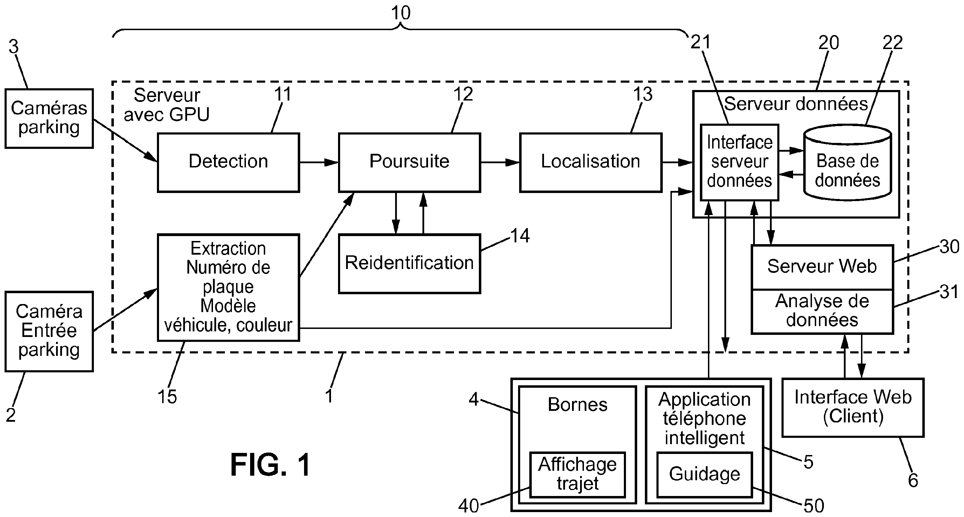

La figure 1 représente schématiquement un exemple du système permettant la mise en œuvre du procédé de localisation d'un emplacement de stationnement d'un véhicule dans un parking équipé de plusieurs caméras, selon un mode de réalisation de l'invention.

### DESCRIPTION DETAILLEE DE L'INVENTION

La figure 1 représente schématiquement un exemple du système permettant la mise en œuvre du procédé de localisation d'un emplacement de stationnement d'un véhicule dans un parking équipé de plusieurs caméras, selon un mode de réalisation de l'invention.

Les termes de plaque d'immatriculation ou de plaque minéralogique sont considérés comme synonymes et seront utilisés indifféremment l'un pour l'autre dans tout le texte. Les termes d'emplacement de stationnement ou de place de stationnement sont considérés comme synonymes et seront utilisés indifféremment l'un pour l'autre dans tout le texte.

Le parking comprend une caméra d'entrée 2, située à l'entrée du parking, et plusieurs autres caméras 3, situées à d'autres endroits dans le parking.

Dans le parking, les caméras 2 et 3 prennent des images des véhicules. La caméra 2 prend une image d'un véhicule entrant dans le parking afin que sa plaque d'immatriculation puisse être reconnue. Les caméras 3 prennent des images de ce véhicule circulant dans le parking afin de pouvoir suivre son trajet grâce à la reconnaissance de sa plaque d'immatriculation. Les caméras 2 et 3 se contentent de prendre des images et de les transmettre à un serveur 1 qui va les traiter.

Le serveur informatique 1 peut se décomposer en trois parties de serveurs ou, pour simplifier, en trois serveurs informatiques distincts 10, 20 et 30 plus petits, un serveur 10 de reconnaissance, un serveur 20 de stockage, un serveur 30 de traitement statistique. Le serveur 10 assure la reconnaissance de la plaque d'immatriculation d'un véhicule extraite à partir d'une image de ce véhicule. Le serveur 20 assure le stockage des données utiles en relation avec les véhicules et leurs plaques d'immatriculation. Le serveur 30 assure le traitement statistique des données utiles en relation avec les véhicules et leurs plaques d'immatriculation.

Le serveur 10 de reconnaissance comprend un module de détection 11, un module de suivi 12, un module de localisation 13, un module de ré-identification 14, un module d'extraction 15.

Le module d'extraction 15 reçoit une image d'un véhicule entrant dans le parking, prise et transmise par la caméra d'entrée 2. Le module d'extraction 15 analyse l'image reçue à l'aide de processeurs graphiques (GPU pour « graphic processing unit » en langue anglaise) et d'un modèle d'apprentissage profond (« deep learning » en langue anglaise) pour en extraire la plaque d'immatriculation, et plus précisément le numéro de la plaque d'immatriculation. Une fois extrait, cette plaque d'immatriculation, ou plus précisément ce numéro de plaque d'immatriculation, est envoyé par le module d'extraction 15 au module de suivi 12. Le module de d'extraction 15 peut aussi extraire d'autres informations comme le modèle du véhicule et la couleur du véhicule, également transmises ensuite jusqu'au serveur 20 de stockage en étant associées au couple formé par la plaque d'immatriculation et l'emplacement de stationnement pour un véhicule donné.

Un avantage d'utiliser des processeurs graphiques associés à un modèle d'apprentissage profond et ayant réalisé préalablement leur apprentissage sur ce modèle d'apprentissage profond, est de pouvoir reconnaître des objets dans une image, comme par exemple une plaque d'immatriculation, de manière rapide, voire même en temps réel, pour un coût d'exploitation aujourd'hui devenu raisonnable et même tout à fait abordable si les formes à reconnaître sont semblables entre elles, ce qui est le cas des plaques d'immatriculation.

Le module de détection 11 reçoit une image d'un véhicule circulant dans le parking, prise et transmise par l'une des caméras 3 situées à l'intérieur du parking. Le module de détection 11 analyse l'image reçue à l'aide de processeurs graphiques et d'un modèle d'apprentissage profond pour en extraire la plaque d'immatriculation, et plus précisément le numéro de la plaque d'immatriculation. Une fois extrait, cette plaque d'immatriculation, ou plus précisément ce numéro de plaque d'immatriculation, est envoyé par le module de détection 11 au module de suivi 12.

Le module de suivi 12 échange avec le module de ré-identification 14. Le module de ré-identification 14 identifie un véhicule donné sur les différentes images où il se trouve grâce à sa plaque d'immatriculation. Le module de suivi 12 reconstitue le trajet du véhicule, grâce au suivi de sa plaque d'immatriculation sur les images fournies par les caméras 2 et 3, effectué par le module de ré-identification 14, depuis l'entrée du parking jusqu'à l'emplacement de stationnement du véhicule.

De plus, le module de suivi 12 peut transmettre les différentes positions d'un véhicule donné successivement repéré sur plusieurs images de plusieurs caméras 3, vers la base de données 22 du serveur 20 de stockage pour qu'à partir de ces données stockées, le module d'analyse 31 du serveur 30 de traitement statistique puisse reconstituer par exemple le trajet complet d'un véhicule donné, depuis son entrée dans le parking jusqu'à son emplacement de stationnement.

Le module de localisation 13 analyse la ou les dernières images transmises par la dernière caméra 3 à avoir vu un véhicule donné correspondant à une plaque d'immatriculation donnée, pour estimer la distance à laquelle ce véhicule est stationné de cette dernière caméra 3, de manière à en déduire, par rapport à la position dans le parking de cette dernière caméra 3, la position de l'emplacement de stationnement de ce véhicule donné. Ensuite, le module de localisation 13 transmet l'emplacement de stationnement de ce véhicule donné associée à sa plaque d'immatriculation identifiée (en fait au numéro de la plaque d'immatriculation) au serveur 20 de stockage.

Le serveur 20 de stockage comprend une interface 21 de données pour les serveurs ainsi qu'une base de données 22.

Le serveur 20 de stockage reçoit les couples formés par des plaques d'immatriculation et des emplacements de stationnement au travers de l'interface 21, ces couples pouvant également être associés à d'autres informations complémentaires comme le modèle du véhicule ou la couleur du véhicule. Le serveur 20 de stockage stocke les données reçues via l'interface 21 dans une base de données 22. Lorsque certaines données stockées seront demandées par d'autres serveurs, la base de données 22 les transmettra à l'extérieur du serveur 20 de stockage également via l'interface 21.

Le serveur 30 de traitement statistique est un serveur internet qui comprend un module d'analyse 31 de données. Le module d'analyse 31 peut faire différents traitements statistiques des données stockées dans la base de données 22 pour en extraire des résultats ou des paramètres ensuite renvoyés vers l'application client internet 6 sur requête de celle-ci.

Dans le parking, se trouvent des bornes interactives 4 comprenant des écrans d'affichage de trajets 40 ou de guidages 40 de la borne interactive 4 vers l'emplacement de stationnement du véhicule de l'utilisateur. Lorsque l'utilisateur demande un guidage 40 sur la borne interactive 4, l'écran de cette borne interactive 4 indique à cet utilisateur le chemin à suivre pour aller de cette borne interactive 4 jusqu'à l'emplacement de stationnement de son véhicule. L'utilisateur ayant parcouru une partie de ce chemin, peut le redemander auprès d'une autre borne interactive 4 croisée ensuite ; cette autre borne interactive 4 lui affichera alors le chemin restant à parcourir depuis cette autre borne interactive 4 jusqu'à l'emplacement de stationnement de son véhicule.

Dans le parking, se déplacent plusieurs utilisateurs ayant chacun un terminal mobile 5 muni d'une application de téléphone intelligent (« smartphone » en langue anglaise), chaque terminal mobile 5 étant apte à afficher un guidage 50 de la position de l'utilisateur dans le parking vers l'emplacement de stationnement du véhicule de l'utilisateur.

L'utilisateur souhaitant retrouver son emplacement de stationnement va faire une demande de guidage depuis l'application mobile de son terminal mobile vers le serveur 1. Le serveur 1 va lui envoyer un guidage 50 depuis la position de son terminal mobile vers son emplacement de stationnement qui va être affiché sur l'écran de son terminal mobile, par exemple sous forme de chemin à suivre sur une carte des lieux. Ce guidage visuel 50 va éventuellement être accompagné d'un guidage vocal 50 qui va être progressivement communiqué à l'utilisateur au fur et à mesure de sa progression via l'assistant vocal de son terminal mobile 5. Ce guidage 50 peut utiliser le GPS (GPS pour « Global Positioning System » en langue anglaise). Le guidage 50, visuel et/ou vocal utilise l'emplacement de stationnement du véhicule de l'utilisateur qui le demande, cet emplacement de stationnement étant récupéré par l'interface 21 auprès de la base de données 22.

A distance, c'est-à-dire de manière déportée par rapport au parking et même par rapport au serveur 1, une application client internet 6 peut interroger le serveur 1 pour extraire soit des données stockées soit des résultats d'analyse de ces données stockées. L'application client internet 6 est utilisée par le gestionnaire du parking afin d'analyser certains résultats ou paramètres issus du module d'analyse 31, comme les types de véhicule se stationnant dans ce parking, les trajets qu'ils empruntent, les vitesses auxquelles ils roulent, etc... , de manière à améliorer la maintenance et la réfection de son parking, voire de manière à modifier la structure et la disposition des emplacements de stationnement, et/ou des caméras, et/ou des bornes interactives, dans un futur parking à construire par exemple.

Bien entendu, la présente invention n'est pas limitée aux exemples et au mode de réalisation décrits et représentés, mais elle est susceptible de nombreuses variantes accessibles à l'homme de l'art.

## Revendications

1. Procédé de localisation d'un emplacement de stationnement d'un véhicule dans un parking équipé de plusieurs caméras (2, 3), comprenant :
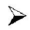 une détection (15), par une caméra (2) située à l'entrée du parking, du véhicule et de sa plaque d'immatriculation, lors de son entrée dans le parking,
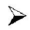 un suivi (12, 14) du trajet du véhicule dans le parking, par reconnaissance, par une ou plusieurs caméras (3) situées le long de son trajet, de sa plaque d'immatriculation préalablement détectée,
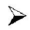 une localisation (13), de l'emplacement de stationnement du véhicule ou de la zone autour de l'emplacement de stationnement du véhicule, dans le parking à la fin de son trajet, à partir d'une ou de plusieurs des dernières images prises par la dernière caméra (3) à avoir reconnu sa plaque d'immatriculation pendant le suivi (12, 14) de son trajet.

2. Procédé de localisation d'un emplacement de stationnement d'un véhicule selon la revendication 1, **caractérisé en ce que** la localisation (13) de l'emplacement de stationnement du véhicule dans le parking, est réalisée par une estimation de la distance entre le véhicule stationné et cette dernière caméra (3), cette estimation étant réalisée par une analyse de la ou des images prises par cette dernière caméra (3), cette analyse utilisant avantageusement un modèle d'apprentissage profond et/ou un ou plusieurs processeurs graphiques.

3. Procédé de localisation d'un emplacement de stationnement d'un véhicule selon la revendication 2, **caractérisé en ce que** :
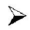 l'estimation de distance est réalisée :
∘ soit à partir d'une seule image 2D du véhicule prise sur l'emplacement de stationnement,
∘ soit à partir d'au moins deux images 2D du véhicule prises par la même caméra, l'une sur l'emplacement de stationnement et l'autre à une distance prédéterminée connue de cette caméra (3),
∘ soit à partir d'au moins deux images 2D du véhicule prises par deux caméras (3) différentes sous deux angles différents.

4. Procédé de localisation d'un emplacement de stationnement d'un véhicule selon la revendication 1, **caractérisé en ce que** la localisation (13) de l'emplacement de stationnement du véhicule dans le parking, est réalisée par une reconnaissance d'un numéro d'emplacement de stationnement situé au niveau de chaque emplacement de stationnement ou de chaque groupe d'emplacements de stationnement adjacents.

5. Procédé de localisation d'un emplacement de stationnement d'un véhicule selon l'une quelconque des revendications précédentes, **caractérisé en ce que** la reconnaissance (14, 15), par la ou les caméras (3) du parking situées le long du trajet du véhicule, et par la caméra (2) située à l'entrée du parking, de sa plaque d'immatriculation, est réalisée par une analyse d'une ou de plusieurs images prises par cette ou par ces caméras (2, 3), cette analyse utilisant avantageusement un modèle d'apprentissage profond et/ou un ou plusieurs processeurs graphiques.

6. Procédé de localisation d'un emplacement de stationnement d'un véhicule selon l'une quelconque des revendications précédentes, **caractérisé en ce que**, pour au moins 80% du nombre d'emplacements de stationnement du parking, de préférence pour au moins 90% du nombre d'emplacements de stationnement du parking, de préférence pour tous les emplacements de stationnement du parking, chaque emplacement de stationnement peut être vu au moins par une caméra (3) du parking,
et/ou **en ce que** tous les emplacements de stationnement du parking sont dans le champ de vision d'au moins une caméra (3) du parking,
et/ou **en ce que**, à chaque étage du parking, se trouve au moins une caméra (3), disposée avantageusement à l'entrée de cet étage.

7. Procédé de localisation d'un emplacement de stationnement d'un véhicule selon l'une quelconque des revendications précédentes, **caractérisé en ce que**, si le véhicule est sorti du champ de la dernière caméra (3) ayant reconnu sa plaque d'immatriculation, mais n'est pas entré dans le champ de la caméra (3) suivante qu'il aurait rencontré s'il avait continué son trajet, le procédé de localisation en déduit que le véhicule est resté stationné dans la zone d'ombre située entre la dernière caméra (3) et la caméra (3) suivante.

8. Procédé de localisation d'un emplacement de stationnement d'un véhicule selon l'une quelconque des revendications précédentes, **caractérisé en ce que** la localisation (13) est effectuée sans utilisation d'objet additionnel qui serait situé dans le véhicule et qui permettrait une géolocalisation directe du véhicule, avantageusement sans aucun autre moyen que la reconnaissance d'image par les caméras (3) du parking.

9. Procédé de localisation d'un emplacement de stationnement d'un véhicule selon l'une quelconque des revendications précédentes, **caractérisé en ce que** la détection (15) de la plaque d'immatriculation du véhicule est réalisée systématiquement et automatiquement pour tout véhicule entrant dans le parking,
et/ou **en ce que** le suivi (12, 14) de trajet est réalisé en temps réel, pour tous les véhicules cherchant un emplacement de stationnement dans le parking, avantageusement pour tous les véhicules circulant dans le parking.

10. Procédé de localisation d'un emplacement de stationnement d'un véhicule selon l'une quelconque des revendications précédentes, **caractérisé en ce que** la plaque d'immatriculation détectée (15) à l'entrée du parking est stockée dans une base de données (22), au moins tout le temps que le véhicule reste sur son emplacement de stationnement, avantageusement au moins tout le temps que le véhicule reste dans le parking, encore plus avantageusement plus longtemps que le temps de séjour du véhicule dans le parking.

11. Procédé de localisation d'un emplacement de stationnement d'un véhicule selon l'une quelconque des revendications précédentes, **caractérisé en ce que** la détection (15), par une caméra (2) située à l'entrée du parking, du véhicule et de sa plaque d'immatriculation, lors de son entrée dans le parking, effectue également la détection, à l'entrée du parking, d'autres informations relatives au véhicule, parmi lesquelles au moins le modèle du véhicule et la couleur du véhicule, qui sont ensuite stockées dans une base de données (22), au moins tout le temps que le véhicule reste sur son emplacement de stationnement, avantageusement au moins tout le temps que le véhicule reste dans le parking, encore plus avantageusement plus longtemps que le temps de séjour du véhicule dans le parking.

12. Procédé de guidage d'un utilisateur vers l'emplacement de stationnement de son véhicule dans un parking équipé de plusieurs caméras, comprenant :
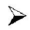 un procédé de localisation de l'emplacement de stationnement de son véhicule selon l'une quelconque des revendications précédentes,
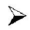 un envoi vers un terminal mobile (5) de cet utilisateur, sur requête de cet utilisateur par l'intermédiaire de son terminal mobile (5), d'un guidage (50) allant de la position de l'utilisateur lors de sa requête vers l'emplacement de stationnement de son véhicule,
de préférence en ce que :
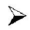 si l'utilisateur a oublié sa plaque d'immatriculation, mais donne le modèle et la couleur du véhicule, le procédé de guidage lui propose une sélection possible de plusieurs plaques d'immatriculation et/ou de plusieurs trajets possibles, l'utilisateur pouvant alors en sélectionner l'une ou l'un d'entre eux, l'utilisateur pouvant ensuite en sélectionner une ou un autre si la sélection précédente ne correspondait pas à son véhicule,
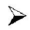 le guidage (50) envoyé correspondant à la plaque d'immatriculation ou au trajet sélectionné(e) par l'utilisateur, et/ou de préférence en ce que le terminal mobile (5) est un téléphone mobile, la requête de l'utilisateur étant avantageusement transmise par une application smartphone.
et/ou de préférence en ce que :
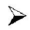 le guidage (50) allant de la position de l'utilisateur lors de sa requête vers l'emplacement de stationnement de son véhicule est affiché sur l'écran de son terminal mobile (5),
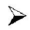 et/ou le guidage allant de la position de l'utilisateur lors de sa requête vers l'emplacement de stationnement de son véhicule est décrit oralement par l'assistant vocal de son terminal mobile (5).

13. Procédé de traitement statistique des données relatives aux trajets des véhicules dans un parking équipé de plusieurs caméras, comprenant :
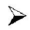 un procédé de localisation de l'emplacement de stationnement des véhicules selon l'une quelconque des revendications 1 à 11,
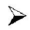 un stockage dans une base de données (22), d'un ensemble de données relatives aux trajets des véhicules dans le parking,
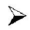 un traitement statistique (31) différé des données stockées déterminant des paramètres relatifs aux trajets des véhicules dans le parking,
de préférence en ce que :
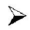 les données stockées comprennent une ou plusieurs données parmi lesquelles :
∘ les modèles de véhicule,
∘ les couleurs de véhicule,
∘ les trajets empruntés par les véhicules,
∘ les vitesses réalisées par les véhicules,
∘ les essais ratés de stationnement avec prolongement de trajet,
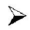 les paramètres déterminés stockées comprennent un ou plusieurs paramètres parmi lesquels :
∘ temps moyen de circulation d'un véhicule pour trouver un emplacement de stationnement,
∘ nombre moyen d'étages du parking parcouru par un véhicule pour trouver un emplacement de stationnement,
∘ la qualité d'un emplacement de stationnement, selon qu'un véhicule qui passe devant lorsqu'il est libre, s'y stationne ou non, ou essaye de s'y stationner sans réussir pour en repartir immédiatement,
et/ou de préférence en ce que les données stockées sur la base de données (22) sont récupérées, pour réaliser le traitement statistique différé (31), par l'intermédiaire d'une interface (6) internet du gestionnaire du parking déportée par rapport au parking.

14. Parking intégrant :
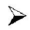 plusieurs caméras (2, 3) aptes à prendre des images de plaques d'immatriculation de véhicules,
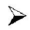 un serveur (10) de reconnaissance de plaques d'immatriculation de véhicules,
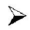 une base de données (22) de stockage de plaques d'immatriculation de véhicules, et avantageusement d'autres informations relatives aux véhicules,
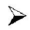 les caméras (2, 3), le serveur de reconnaissance (10) et la base de données (22), étant reliés entre eux, de manière à pouvoir réaliser :
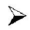 un procédé de localisation de l'emplacement de stationnement des véhicules selon l'une quelconque des revendications 1 à 11,
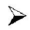 et/ou un procédé de guidage d'un utilisateur vers l'emplacement de stationnement de son véhicule selon la revendication 12,
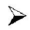 et/ou un procédé de traitement statistique des données relatives aux trajets des véhicules selon la revendication 13,
et/ou de préférence en ce qu'il intègre également :
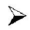 une ou plusieurs bornes interactives (4), chaque borne interactive (4) étant apte à afficher un plan du parking et un guidage (40) allant de la position de cette borne interactive (4) vers l'emplacement de stationnement du véhicule d'un utilisateur sur requête de cet utilisateur,
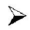 et/ou une ou plusieurs panneaux affichant respectivement des QR codes, l'emplacement de chacun de ses panneaux étant répertorié dans le parking, de manière à permettre l'affichage sur le terminal mobile (5) de l'utilisateur le requérant, un guidage (50) allant de la position de ce panneau vers l'emplacement de stationnement de son véhicule.

15. Parking selon la revendication 14, **caractérisé en ce que** ce parking est soit un parking d'aéroport, soit un parking de gare, soit un parking de caserne.
